# EUROPEAN PATENT APPLICATION

(11) **EP 4 620 304 A1**
(43) Date of publication of application: **24.09.2025**
(21) Application number: 24165254.4
(22) Date of filing: 21.03.2024
(51) Int. Cl.: A01N 43/80, A01N 47/30, A01N 43/64, A01N 43/707, A01N 25/02, A01N 25/04, A01P 13/00

(54) **FORMULATION COMPRISING CLOMAZONE AND DIURON**

(71) Applicant: Adama Agan Ltd., 7710201 Ashdod (IL)
(72) Inventor: MACHADO, Silvio Luiz, 86058-100 Londrina, Parana (BR); COLLA, Luiz Fernando, 86055-782 Londrina, Paraná (BR)
(74) Representative: ABG Intellectual Property Law, S.L.

(57) **Abstract**

The present invention is directed to a formulation comprising: i) clomazone; ii) a second active ingredient having a solubility in clomazone above 35 g/L at 23 °C; iii) diuron; and iv) a first solvent in which said second active ingredient is more soluble than diuron; wherein the amount of clomazone is not enough to solubilize all of the second active ingredient present in the formulation; wherein the amount of said first solvent is enough to solubilize any second active ingredient not solubilized in clomazone; and wherein the weight proportion between the first solvent and the second active ingredient is less than 1.39. The invention also covers tank mixtures of the formulation, and weeding methods.

## Description

### FIELD OF INVENTION

The present invention relates to formulations comprising clomazone, a second active ingredient and diuron, and to methods of controlling weeds comprising applying said formulations or tank mixtures thereof.

### BACKGROUND OF INVENTION

The vulnerability of crops to weeds makes crop protection management one of the major components of the total crop production system. Various insects and fungi along with the undesired weeds are harmful to crop plants and can significantly reduce crop yields and qualities. Herbicides alone or in combination help minimize this damage by controlling threats to the crop. Combinations of herbicides or mixtures of one or more herbicides with other active ingredients are typically used to broaden spectrum of control, to minimize the doses of chemicals used, to retard the development of resistance and to reduce the cost of the treatment through additive effect. It is however a challenging task to create stable formulations of two or more active ingredients. The formulation must be stable during the manufacturing process, during storage, as well as stable when tank mixing.

These challenges increase with the number and complexity of the components, and the formulation chemist must avoid many potential problems. A usual problem of formulations is the formation of solids during storage. Some of these problems are aggregation of the solid particles, crystal growth or coalescence of the emulsion droplets, mainly due to Ostwald ripening. Further problems are typically the control of viscosity in order to obtain a formulation wherein solids do not settle but at the same time maintains a good flowability, and equilibrium that can be challenging.

Clomazone is a herbicide for the control of broad-leaved weeds and grasses in a range of crops of the family of the Isoxazolidinones. It is liquid at room temperature and readily soluble in different organic solvents. Clomazone acts by Inhibiting DOXP synthase and belongs to group 13 according to the HRAC classification (Herbicide Resistance Action Committee).

Diuron is a pre-emergence residual herbicide for total control of weeds and mosses of the family of ureas. Diuron acts by inhibiting the photosynthesis of PSII and belongs to group 5 according to the HRAC classification. It is liquid at room temperature and is extremely insoluble in water and most organic solvents. Due to its low solubility diuron is prone to Ostwald ripening, partially dissolving and then recrystallizing around other solids, resulting in an undesired crystal growth.

It is an object of the present invention to provide formulations of judiciously selected components which have improved characteristics. For example, it is an object of the present invention to provide formulations that avoid the dissolution and later recrystallization of diuron. It is a further object of the present invention to provide formulations that achieve an optimal stability, for example by achieving an optimal viscosity.

### SUMMARY OF THE INVENTION

It is an endeavor of the present invention to find formulations comprising clomazone and diuron that prevent the re-crystallization of diuron and crystal growth as well as improving other features. Considering the above, it is a first aspect of the present invention to provide a formulation (formulation of the invention) comprising:
i) clomazone;
ii) a second active ingredient having a solubility in clomazone above 35 g/L at 23 °C;
iii) diuron; and
iv) a first solvent in which said second active ingredient is more soluble than diuron;

wherein the amount of clomazone is not enough to solubilize all the second active ingredient present in the formulation;
wherein the amount of said first solvent is enough to solubilize any second active ingredient not solubilized in clomazone; and
wherein the weight proportion between the first solvent and the second active ingredient if less than 1.39.

The combination of the relative solubilities of the components defined above in the first aspect decreases re-crystallization of diuron in the formulation, reducing or completely eliminating crystal size growth and thus improving the overall stability and usability of the formulation. When the amount of the second active ingredient is enough to saturate the solubilizing capabilities of clomazone, the partial dissolution of diuron is prevented, preventing its later re-crystallization. It is therefore preferred that the amount of said second active ingredient is above the solubility threshold thereof in clomazone, with respect to the total amount of clomazone. Whatever amount of the second active ingredient is not solubilized in clomazone, it is solubilized by the first solvent. The amount of first solvent must enough to solubilize whatever second active ingredient has not been solubilized in clomazone, and at the same time short of dissolving diuron.

It is a further object of the present application to provide a formulation having an optimal viscosity. Thus, a second aspect of the present application is a formulation (formulation of the invention) comprising:
i) clomazone;
ii) a second active ingredient having a solubility in clomazone above 35 g/L at 23 °C;
iii) diuron; and
wherein the formulation further comprises a fumed silica and a pyrogenic silica.

The inventors have found that the formulation of the invention achieves an optimal viscosity when a combination of a fumed silica and a pyrogenic silica is used.

Further aspects of the present invention are listed below:
- A tank mixture (tank mixture of the invention) comprising a formulation of the invention, and water and/or an adjuvant.
- A method for controlling weeds comprising contacting the weeds or their locus with an agriculturally effective amount of a formulation of the invention or a tank mixture of the invention.
- The use of a formulation of the invention for controlling weeds.
- A method for the preparation of a formulation of the invention, comprising the steps of mixing clomazone, a second active ingredient having a solubility in clomazone above 35 g/L at 23 °C, diuron, and a first solvent, wherein the amount of clomazone is not enough to solubilize all of the second active ingredient present in the formulation; wherein the amount of said first solvent is enough to solubilize any second active ingredient not solubilized in clomazone; and wherein the weight proportion between the first solvent and the second active ingredient if less than 1.39.
- A method for the preparation of the tank mixture of the invention, comprising the step of mixing a formulation of the invention and water.

### DETAILED DESCRIPTION OF THE PRESENT INVENTION

### Definitions

Prior to setting forth the present subject matter in detail, it may be helpful to provide definitions of certain terms used herein. Unless defined otherwise, all technical and scientific terms used herein have the same meaning as is commonly understood by one of skill in the art to which this subject matter pertains.

As used herein, the term "active ingredient" includes, but is not limited to, herbicides, insecticides, and fungicides.

As used herein, the term "herbicide" refers to an active ingredient capable of controlling unwanted plants or weeds, for example when growing in the locus of a desired crop.

As used herein, the terms "control" or "controlling" are meant to include, but are not limited to, any killing, growth regulating, inhibiting or interfering with the normal life cycle of a weeds.

As used herein, the term "effective" when used to describe a method for controlling, means that the method provides a good level of control of the undesired weeds without significantly interfering with the normal growth and development of the crop.

As used herein, the term "effective amount" when used in connection with an active ingredient or a combination of active ingredients refers to an amount thereof that, when ingested, contacted with or sensed, is sufficient to achieve a good level of control or activity without significantly harming the crop.

As used herein, the term "effective amount" when used in connection with a non-active component, i.e. additive, such as a surfactant or an organic carrier, refers to an amount of the additive that is sufficient to perform its function within the formulation.

As used herein, the term "agriculturally acceptable carrier" means a carrier which is known and accepted in the art for the formation of compositions for agricultural or horticultural use, and are accepted by at least one regulatory authority such as the EPA (Environmental Protection Agency).

As used herein, the term "agriculturally acceptable additives" is defined as any substance that itself is not an active ingredient but is added to the formulation to improve its properties, such as stability, flowability, density, etc., and are accepted by at least one regulatory authority such as the EPA (Environmental Protection Agency). Examples of such additives are pH modifiers (e.g. acids or bases), thickening agents, sticking agents, surfactants, anti-oxidation agents, anti-foaming agents and thickeners.

As used herein, the term "adjuvant" is broadly defined as any substance that itself is not an active ingredient, but which enhances or is intended to enhance the effectiveness of the pesticide with which it is used. Adjuvants may be understood to include, but are not limited to, spreading agents, penetrants, compatibility agents, and drift retardants. They are typically used to dilute ready mix formulations in tank mixtures prior to application in the field, although some formulations include built-in adjuvants.

As used herein, the term "ready mix" means a concentrated (e.g. more than 1 wt.% of active ingredients) formulation that may be applied to plants directly after dilution. The formulation comprises one or more active ingredients. The term "mixture" refers, but is not limited to, a combination in any physical form, e.g., blend, solution, alloy, or the like.

As used herein, the term "tank mix" or "tank mixture" refers to the mixture of a ready mix formulation with water and/or adjuvants shortly before application. Tank mixtures can therefore be formed by mixing one or more formulations (each comprising one or more active ingredients) with water and/or an adjuvant. Thus, tank mixtures may comprise the mixture of one or more formulations (each comprising one or more active ingredients) with one or more adjuvants.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes a habitat, breeding ground, plant, propagation material, soil, area, material or environment in which a pest is growing or may grow.

As used herein, the term "genetically modified plants" includes plants which have been modified by breeding, mutagenesis or genetic engineering. Genetically modified plants are plants, which genetic material has been modified by the use of recombinant DNA techniques. Typically, one or more genes have been integrated into the genetic material of such a plant in order to improve certain properties of the plant.

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising", which is an open definition encompassing at least the components listed in each case. It will be understood by one of skill in the art that embodiments said embodiments using "comprising" also encompass the more limited "consisting essentially of" or "consisting of" embodiments, the latter being limited to the components listed.

As used herein the term "ha" refers to hectare.

As used herein, the term "g" refers to gram, and "L" or "I" refers to liter.

As used herein, the term "surfactant" means an agriculturally acceptable material which imparts emulsifiability, stability, spreading, wetting, dispersibility or other surface-modifying properties. Examples of suitable surfactants include non-ionic, anionic, cationic and ampholytic surfactants.

For purposes of better understanding the present teachings and in no way limiting the scope of the teachings, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, use of the term "about" herein specifically includes ±10% from the indicated values in the range. In addition, the endpoints of all ranges directed to the same component or property herein are inclusive of the endpoints, are independently combinable, and include all intermediate points and ranges.

Unless otherwise specified, references to percentages of a component present in a combination are by weight (wt.) percentages of the component with respect to the total weight of the combination.

It is further understood that where a parameter range is provided, all integers within that range, and tenths thereof, are also provided by the subject matter. For example, "0.1% to 50%" includes 0.1 %, 0.2 %, 0.3 %, 0.4 % etc. up to 50 %.

As used herein, the phrase "block copolymer" means a polymer comprising at least two different polymers combined by a covalent bond. Each of the blocks is usually a homopolymer but can also be a copolymer with a specific distinct physical/chemical or functional characteristic (e.g., having one block that is easily soluble in water, with the other block being primarily insoluble in water).

When a ratio "X:Y" is said to be "n or higher", it is meant that the division between "X" and "Y" (i.e. X/Y) has a result of n or higher. When a ratio "X:Y" is said to be "n or less", it is meant that the division between "X" and "Y" (i.e. X/Y) has a result of n or less.

### Active ingredients and the First Solvent

The formulation of the invention comprises the active ingredients i) clomazone, ii) the second active ingredient having a solubility in clomazone above 35 g/L at 23 °C, and iii) diuron. The formulation may comprise additional active ingredients, as well as non-active ingredients or adjuvants. Alternatively, the formulation may contain clomazone, the second active ingredient having a solubility in clomazone above 35 g/L at 23 °C, and diuron as the only active ingredients, that is, the formulation may comprise non-active ingredients, optionally an adjuvant, and a mixture of active ingredients, said mixture of active ingredients consisting of clomazone, the second active ingredient having a solubility in clomazone above 35 g/L at 23 °C, and diuron.

Said second active ingredient can be an insecticide, a fungicide or a herbicide as long as it has a solubility in clomazone above 35 g/L at 23 °C. The second active ingredient is typically a herbicide. Said second active ingredient can therefore be a herbicide wherein the mode of action is one selected from the group consisting Inhibition of ACCase (HRAC group 1), Inhibition of ALS (HRAC group 2), Inhibition of microtubule assembly (HRAC group 3), Auxin mimics (HRAC group 4), Inhibition of photosynthesis PS II-Serine 264 (HRAC group 5), Inhibition of photosynthesis PS II-Histidine 215 (HRAC group 6), Inhibition of EPSP synthase (HRAC group 9), Inhibition of glutamine synthetase (HRAC group 10), Inhibition of PDS (HRAC group 12), Inhibition of DOXP synthase (HRAC group 13), Inhibition of PPO (HRAC group 14), Inhibition of VLCFAs (HRAC group 15), DHP inhibition (HRAC group 18), Auxin transport inhibitors (HRAC group 19), PS I electron diversion (HRAC group 22), Inhibition of microtubule organization (HRAC group 23), Uncouplers (HRAC group 24), Inhibition of HPPD (HRAC group 27), Inhibition of dihydroorotate dehydrogenase (HRAC group 28), Inhibition of cellulose synthesis (HRAC group 29), Inhibition of fatty acid thioesterase (HRAC group 30), Inhibition of serine threonine protein phosphatase (HRAC group 31), Inhibition of solanesyl diphosphate synthase (HRAC group 32), Inhibition of homogentisate solanesyl transferase (HRAC group 33), and Inhibition of lycopene cyclase (HRAC group 34), and Unknown mode of action.

Preferably, said second herbicide is selected from the group consisting of herbicides inhibiting photosynthesis PS II-Serine 264 (HRAC group 5), for example, one selected from the group consisting of triazines, ureas, triazinones, uracils, phenylcarbamates and amides, more preferably, a triazinone, such as hexazinone, metamitron or metribuzin. The formulations of the invention preferably comprise clomazone, hexazinone and diuron. For example, the active ingredients present in the formulation of the invention may consist of clomazone, hexazinone, and diuron.

The second active ingredient must (a) have a solubility in clomazone above 35 g/L at 23 °C, and (b) be added in amounts that exceed its solubility in clomazone, that is, the formulation has an amount of clomazone that it is not enough to solubilize all of the second active ingredient present in the formulation. In other words, the amount of the second active ingredient present in the formulation must be enough to saturate clomazone, and thus prevent clomazone from dissolving diuron. It is preferred that the amount of said second active ingredient is 100 wt.% or more, for example 105 wt.% (i.e 5% excess in weight) or more the amount that can be solubilized by clomazone in the formulation. For example, the amount of said second active ingredient can be 110 wt.% or more the amount that can be solubilized by clomazone in the formulation, or 120 wt.% or more, or 130 wt.% or more, or 140 wt.% or more, or 150 wt.% or more, or 170 wt.% or more, or 200 wt.% or more, or 250 wt.% or more. For example, the amount of said second active ingredient can be between 105 wt.% and 500 wt.% the amount that can be solubilized by clomazone in the formulation, for example, between 110 wt.% and 300 wt.%, between 115 wt.% and 250 wt.%, between 120 wt.% and 250 wt.%, between 125 wt.% and 220 wt.%, between 130 wt.% and 200 wt.%, or between 120 wt.% and 500 wt.%.

At the same time the first solvent must dissolve any amount of the second active ingredient that is not dissolved in the clomazone. It is preferred that the amount of said first solvent is 500 wt.% or less the amount needed to solubilize any amount of the second active ingredient that has not solubilized in clomazone. For example, the amount of said first solvent can be 350 wt.% or less the amount needed to solubilize any amount of the second active ingredient that has not solubilized in clomazone, or 300 wt.% or less, or 250 wt.% or less, or 200 wt.%, or 150 wt.% or less, or 120 wt.% or less, or 110 wt.% or less the amount needed to solubilize any amount of the second active ingredient that has not solubilized in clomazone. At the same time it is preferable that the solubility of diuron in the first solvent is low in order to avoid Ostwald ripening, for example 10 g/L or less, or 5 g/L or less, or 3g/L or less, or 2 g/L or less, or 1 g/L or less, or 0.5 g/L or less, or 0.1 g/L or less. Similarly, it is preferred that the solubility of the second active ingredient in the first solvent is 10 g/L or more, for example 20 g/L or more, or 25 g/L or more, or 30 g/L or more, or 35 g/L or more, or 40 g/L or more, or 50 g/L or more.

For example, a formulation of the invention may comprise between 105 wt.% and 500 wt.% of the second active ingredient, with respect to the minimum amount needed to saturate clomazone, and the amount of said first solvent is 500 wt.% or less the amount needed to solubilize any second active ingredient that has not been solubilized in the clomazone.

For example, a formulation of the invention may comprise between 110 wt.% and 300 wt.% of the second active ingredient needed to saturate clomazone, and the amount of said first solvent is 300 wt.% or less the amount needed to solubilize any second active ingredient that has not been solubilized in the clomazone.

The inventors have found that alcohols are preferred first solvents, specially polyalcohols, such as C₂-C₅ polyalcohols, such as diethyleneglycol, ethylene glycol, propylene glycol or butylene glycol, more preferably, propylene glycol. Other solvents that can also be suitable are propylene carbonate or DMSO.

As explained above, hexazinone is a preferred second active ingredient and propylene glycol a preferred first solvent. The weight proportion propylene glycol:hexazinone can be between more than 1 and less than 1.39, for example, between 0.8 and 1.35 or between 1.05 and 1.30; for example, less than 1.39 or 1.35 or less, or 1.32 or less, or 1.30 or less.

For example, the weight proportion clomazone:hexazinone can be equal to or less than 10, for example between 1 and 10, for example, between 2 and 6.

For example, the weight proportion diuron:hexazinone is equal to or less than 10, for example between 1 and 10, for example, between 2 and 6.

For example, the weight proportion clomazone:diuron is between 0.1 and 10, for example between 0.5 and 5, or between 0.9 and 3 or between 1 and 2.

For example, the amount of clomazone is between 1 and 99 wt.%, for example, between 5 and 90 wt.%, between 10 and 75 wt.%, between 15 and 60 wt.%, between 18 and 40 wt.%, or between 20 and 30 wt.%, or between 25 and 29 wt.%, with respect to the total weight of the formulation.

For example, the amount of diuron is between 1 and 99 wt.%, for example, between 5 and 90 wt.%, between 10 and 75 wt.%, between 12 and 60 wt.%, between 15 and 35 wt.%, or between 20 and 30 wt.%, with respect to the total weight of the formulation.

For example, the amount of said second active ingredient is between 1 and 99 wt.%, for example, between 2 and 50 wt.%, between 3 and 20 wt.%, between 3 and 15 wt.%, between 3 and 10 wt.%, or between 3 and 8 wt.%, or between 6 and 9 wt.%, with respect to the total weight of the formulation.

For example, the total amount of said first solvent is between 1 and 99 wt.%, for example, between 2 and 50 wt.%, between 3 and 20 wt.%, between 5 and 15 wt.%, between 6 and 15 wt.%, between 7 and 12 wt.%, with respect to the total weight of the formulation.

A typical formulation of the invention will have 15 to 60 wt.% of clomazone, 12 to 60 wt.% of diuron, 3 to 20 wt.% of the second active ingredient and 3 to 20 wt.% of the first solvent, with respect to the total weight of the formulation, wherein the weight proportion of the first solvent to the second active ingredient is between 0.90 and 1.35. More specifically, the formulation of the invention may have 15 to 60 wt.% of clomazone, 12 to 60 wt.% of diuron, 3 to 20 wt.% of a second active ingredient selected from hexazinone, metamitron, and metribuzine and 3 to 20 wt.% of the first solvent selected from a polyalcohol, such as C₂-C₅ polyalcohol, with respect to the total weight of the formulation, wherein the weight proportion of the first solvent to the second active ingredient is less than 1.39, for example between 0.90 and 1.35. More specifically, the formulation of the invention may have 15 to 60 wt.% of clomazone, 12 to 60 wt.% of diuron, 3 to 20 wt.% of hexazinone and 3 to 20 wt.% of the first solvent selected from a polyalcohol, such as C₂-C₅ polyalcohol, with respect to the total weight of the formulation, wherein the weight proportion of the first solvent to hexazinone is less than 1.39, or 1.35 or less, or between 0.90 and 1.35. More specifically, the formulation of the invention may have 15 to 60 wt.% of clomazone, 12 to 60 wt.% of diuron, 3 to 20 wt.% of hexazinone and 3 to 20 wt.% of the first solvent selected from a polyalcohol, such as ethylene glycol, propylene glycol or butylene glycol, with respect to the total weight of the formulation, wherein the weight proportion of the first solvent to hexazinone is between 0.90 and 1.35.

More specifically, the formulation of the invention may have 18 to 40 wt.% of clomazone, 15 to 35 wt.% of diuron, 3 to 15 wt.% of hexazinone and 5 to 15 wt.% of the first solvent selected from a polyalcohol, such as ethylene glycol, propylene glycol or butylene glycol, with respect to the total weight of the formulation, wherein the weight proportion of the first solvent to hexazinone is less than 1.39 or 1.35 or less, or between 0.90 and 1.35. More specifically, the formulation of the invention may have 18 to 40 wt.% of clomazone, 15 to 35 wt.% of diuron, 3 to 15 wt.% of hexazinone and 5 to 15 wt.% of propylene glycol, with respect to the total weight of the formulation, wherein the weight proportion of propylene glycol to hexazinone is less than 1.39, or 1.35 or less, or between 0.90 and 1.35. More specifically, the formulation of the invention may have 18 to 40 wt.% of clomazone, 15 to 35 wt.% of diuron, 6 to 9 wt.% of hexazinone and 5 to 15 wt.% of propylene glycol, with respect to the total weight of the formulation, wherein the weight proportion of propylene glycol to hexazinone is less than 1.39 or 1.35 or less, or between 0.90 and 1.35.

Commonly available safeners which may be usefully employed, individually or in any combination found to be useful, with the present formulation may include but are in no way limited to Daimuron (Dymron), Cumyluron , Dimepiperate, Fenclorim, Cloquintocet, (Cloquintocet-mexyl), Fenchlorazole-ethyl, Mefenpyr (Mefenpyr-diethyl), Isoxadifen (Isoxadifenethyl), Cyprosulfamide, Dietholate, Benoxacor, BPCMS, Cyometrinil, Dichlormid, Dicyclonon, Dietholate, fenchlorazole, Flurazole, Fluxofenim, Furilazole, Jiecaowan, Jiecaoxi, Mephenate, Metcamifen, Naphthalic anhydride, or Oxabetrinil. Those skilled in the relevant field of art will immediately be aware of further safeners that may be employed without departing from the scope of the mixture of the invention disclosed herein. Combinations of safeners can be employed in the methods and mixtures disclosed herein. As used herein, the term "safener" is understood as a compound that reduces the herbicidal effect on a desirable plant when compared to the expected herbicidal effect without the safener. Thus, the formulation improves selectivity between the desirable crop and the weeds being targeted by the formulation. A safening effect may be identified when the measured herbicidal effect of the formulation on the desirable crop is less than the expected herbicidal effect.

### Other ingredients

The formulations of the invention can be obtained by combining the ingredients i), ii), iii) and iv) in an effective amount with other agriculturally acceptable additives and solvents. Agriculturally acceptable additives, such as solid carriers, surfactants (including dispersants, wetting agents and emulsifiers), anti-foaming, pH modifiers, thickeners, fertilizers, biocides, buffers, colorants, drift retarding agents or antifreeze agents, may also be added to the present compositions to improve the stability, density, and viscosity of the formulations of the invention.

Examples of suitable solvents (also referred to as liquid carriers) potentially useful in the present compositions include but are not limited to water; aromatic hydrocarbons such as alkylbenzenes (e.g. toluene or xylene), tetrahydronaphthalene, alkylnaphthalenes exemplified by the Solvesso^{®} series; alcohols such as alkyl alcohols (e.g. C₁-C₁₂ alkyl alcohols), aromatic alcohols (e.g. C₄-C₂₀ aromatic alcohols, such as benzyl alcohol or furfuryl alcohols) or polyalcohols. Examples of alkyl alcohols are methanol, ethanol, propanol, cyclohexanol, amyl alcohol or decanol. Examples of polyalcohols are ethylene glycol, polypropylene glycol, buthylene glycol or dipropropylene glycol. Examples of aromatic hydrocarbons are aromatic solvents, such as the Caromax^{®} series, including low naphthalene aromatic solvents. Other solvents that can be suitable are amines (e.g. dialkylamines of fatty acids); amides such as N,N-dimethylformamide or dimethylacetamide; N-alkylpyrrolidones such as N-methyl-2-pyrrolidone; N,N-dimethyl lactamide (e.g. Agnique^{®} AMD 3 L); dimethylsulfoxide; paraffins (for example, mineral oil fractions such as kerosene or diesel oil); coal tar oils; or vegetable oils such as olive, castor, linseed, tung, sesame, corn, peanut, cotton-seed, soybean, rape-seed, tall or coconut oil. The vegetable oils can be used as extracted or can be treated to provide esters or epoxidized derivatives. For example, the solvent can be the alkyl ester (e.g. C₁-C₄ alkyl ester, for example the methyl ester) of olive, castor, linseed, tung, sesame, corn, peanut, cotton-seed, soybean, rape-seed, tall or coconut oil. Further solvents can be fatty acid esters (e.g. 2-ethyl hexyl stearate, n-butyl oleate, isopropyl myristate, propylene glycol dioleate); ketones such as cyclohexanone, 2-heptanone, isophorone, or 4-hydroxy-4-methyl-2-pentanone; gamma-butyrolactone; or mixtures thereof. The formulation of the invention may comprise more than one solvent, for example two, three or four solvents.

The present formulation may comprise a second solvent, or a second and a third solvent. The second and third (if present) solvents may be independently selected from the group consisting of vegetable oils and esters of a vegetable oils, for example a vegetable oil or an ester thereof selected from the group consisting of olive, castor, linseed, tung, sesame, corn, peanut, cotton-seed, soybean, rape-seed, tall and coconut oil. It is preferred that the second solvent is the C₁-C₄ alkyl ester of a vegetable oil, preferably, the methyl ester of a vegetable oil, such as olive, castor, linseed, tung, sesame, corn, peanut, cotton-seed, soybean, rape-seed, tall or coconut oil. The third oil can a vegetable oil, for example, tall oil. If present in the formulation of the invention, it is preferably that the second and third solvent are one wherein the second active ingredient and diuron are insoluble.

Exemplary solid carriers include, but are not limited to: solid fertilizers, silicas, silica gels, silicates, talc, kaolin, limestone, lime, chalk, bole, loess, clay, dolomite, diatomaceous earth, calcium sulfate, magnesium sulfate, magnesium oxide, ground synthetic materials, pyrophyllite clay, attapulgus clay, kieselguhr, calcium carbonate, bentonite clay, Fuller's earth, cottonseed hulls, wheat flour, soybean flour, pumice, wood flour, walnut shell flour, lignin, ammonium sulfate, ammonium phosphate, ammonium nitrate, ureas, cereal meal, tree bark meal, wood meal and nutshell meal, cellulose powders, and mixtures thereof.

Examples of suitable surfactants and dispersants include, but are not limited to, non-ionic, anionic, cationic and amphoteric surfactants. Anionic surfactants contain a lipophilic group and an anionic functional group, for example a sulfate, sulfonate, phosphate, or carboxylate. The present formulation may contain one or more aninonic surfactants, for example, one selected from the group consisting of alkyl sulfates (e.g. ammonium lauryl sulfate, sodium lauryl sulfate or SLS, also known as sodium dodecyl sulfate or SDS), haloalkyl sulfates (e.g. perfluorooctanesulfonate or perfluorobutanesulfonate), alkyl-ether sulfates (e.g. sodium laureth sulfate also known as sodium lauryl ether sulfate or SLES, or sodium myreth sulfate), lignin sulfonates, condensates of sulfonated naphthalene and naphthalene derivatives with formaldehyde, condensates of naphthalene or of naphthalenesulfonic acid with phenol and formaldehyde, alkylarylsulfonates such as alkylbenzene sulfonates, haloalkyl sulfonates a sulfosuccinate (e.g. dioctyl sodium sulfosuccinate), alkyl-aryl ether phosphate, alkyl ether phosphate, mono or diphosphate esters (e.g. phosphate esters of alcohol alkoxylates, phosphate esters of alkylphenol alkoxylates or phosphate esters of styrylphenol ethoxylates), carboxylate salts such as alkali metal salts or alkaline earth metal salts or ammonium salts (e.g. sodium stearate), perfluoro carboxylate salts (perfluorononanoate or perfluorooctanoate).

Cationic surfactants contain a lipophilic group and a cationic functional group, for example amines, such as primary, secondary, tertiary or quaternary amines. Examples of the later are cetrimonium bromide (CTAB), cetylpyridinium chloride (CPC), benzalkonium chloride (BAC), benzethonium chloride (BZT), dimethyldioctadecylammonium chloride, and dioctadecyldimethylammonium bromide (DODAB).

Amphoteric surfactants have both cationic and anionic centers attached to the same molecule. The cationic part is typically based on primary, secondary, or tertiary amines or quaternary ammonium cations. The anionic portion can be a sulfate, sulfonate, phosphate, or carboxylate.

Non-ionic surfactants have covalently bonded neutral hydrophilic groups (typically containing oxygen atoms), bonded to hydrophobic structures, wherein the water solubility is typically the result of hydrogen bonding. Examples of non-ionic surfactants are ethoxylates, fatty alcohol ethoxylates (Ethylan^{®} NS-500LQ), alkylphenol ethoxylates (APEs or APEOs) such as ethoxylated alkylphenols (e.g. polyoxyethylene octylphenol ether or ethoxylated isooctyl-, octyl- or nonylphenol) and aryl phenols or tristyrylphenol ethoxylate phosphate esters, fatty acid ethoxylates (including ethoxylates derived from vegetable oils, such as ethoxylated castor oil; Agnique^{®} series), long chain alcohols (e.g. isotridecyl alcohol), ethoxylated amines, ethoxylated fatty acid amides, terminally blocked ethylene oxide/propylene oxide block copolymers (poloxamers), fatty acid esters of polyhydroxy compounds, fatty acid esters of glycerol (e.g. glycerol monostearate or glycerol monolaurate), fatty acid esters of sorbitol (e.g. sorbitan monolaurate, sorbitan monostearate or sorbitan tristearate), ethoxylated polysorbate (e.g. Tween^{®} series), fatty acid esters of sucrose, polyvinyl alcohol-vinyl acetate copolymers, acrylic copolymers and alkyl polyglucosides (e.g. decyl glucoside, lauryl glucoside or octyl glucoside). In many cases the ethoxylated products are marketed with different degrees of ethoxylation. Also, the ethoxylation can be substituted to different degrees with other alkyl groups, thus creating, for example, propoxylated derivitaves or derivatives with a mixture of random or block propoxy and ethoxy groups.

The present formulation can comprise a non-ionic surfactant selected from the group consisting of fatty alcohol ethoxylates, for example polyalkoxylated butyl ether such as Ethylan^{®} NS-500LQ, acrylic copolymers and mixtures thereof. Typically, the formulation comprises 1 to 10 wt.% of a polyalkoxylated butyl ether, 1 to 20 wt.% of an acrylic copolymer and 0.1 to 10 wt.% of said first solvent.

The present formulation may comprise one or more anionic surfactants, selected from the group consisting of sulfates and sulfonates, such as alkyl sulfates (e.g. ammonium lauryl sulfate, sodium lauryl sulfate or SLS, also known as sodium dodecyl sulfate or SDS), haloalkyl sulfates (e.g. perfluorooctanesulfonate or perfluorobutanesulfonate), alkyl-ether sulfates (e.g. sodium laureth sulfate also known as sodium lauryl ether sulfate or SLES, or sodium myreth sulfate), lignin sulfonates, condensates of sulfonated naphthalene and naphthalene derivatives with formaldehyde, condensates of naphthalene or of naphthalenesulfonic acid with phenol and formaldehyde, alkylarylsulfonates such as alkylbenzene sulfonates, haloalkyl sulfonates a sulfosuccinate (e.g. dioctyl sodium sulfosuccinate). For example, the formulation may comprise an alkylarylsulfonates, condensates of sulfonated naphthalene and naphthalene derivatives with formaldehyde, or a mixture of both. Preferably, the present formulation comprises and an alkylarylsulfonate and a condensate of sulfonated naphthalene with formaldehyde.

The formulation of the invention can be an emulsion concentrate, a suspension, a paste, wettable powders or water-dispersible granules. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

The formulation of the invention comprises one or more thickeners. The specific type of thickener is not particularly relevant and those known in the art can be used. Thickeners are typically water-soluble polymers which exhibit suitable plastic properties in an aqueous medium. Suitable thickeners can be compounds which affect the flow behavior of the emulsion and may assist in its stabilization against caking. Mention may be made, for example, of commercial thickeners based on polysaccharides, such as methylcellulose, carboxymethylcellulose, hydroxypropyl- cellulose, Xanthan Gum, synthetic polymers such as acrylic acid polymers, polyvinyl alcohol or polyvinyl pyrrolidones, silica or phyllosilicates such as montmorillonites, attapulgites and bentonites, which may be hydrophobized. The concentration of thickeners in the final formulation will generally not exceed 2 wt.%, based on the total weight of the final formulation, and is preferably in the range from 0.01 to 2 wt.%, in particular from 0.02 to 1.5 wt.% and especially from 0.1 to 1 wt.%, based on the total weight of the formulation.

The formulation of the invention may comprise drift retarding agents, for example, GARDIAN^{®}, GARDIAN^{®} PLUS, DRL GARD^{®}, and PRO-ONE^{®} XL available from Van Diest Supply Co.; COMPADRE, available from Loveland Products, Inc.; BRONC MAX EDT, BRONC PLUS DRY EDT, EDT CONCENTRATE, and IN-PLACE available from Wilbur-Ellis Company; STRIKE ZONE DF available from Helena Chemical Co.; INTACT and INTACT XTRA available from Precision Laboratories, LLC; and AGRHO DR 2000 and AGRHO DEP 775 available from the Solvay Group. Suitable drift retarding agents also include, for example, guar-based (e.g. containing guar gum or derivatized guar gum) drift retarding agents. Non-cellulosic polysaccharide, e.g. guar-based, derivatives, such as cationic guar gum, are for example known from WO 2013/011122, WO 03/095497 or US 2001/0051140.

The preferred thickener according in the formulation of the invention is a mixture of two or more silicas, preferably, of two silicas. It is preferred that the thickener comprises a silica selected from the group consisting of fumed silica, pyrogenic silica and mixtures thereof, and the inventors have found that the formulation has a surprisingly improved viscosity when the thickener comprises a fumed silica and a pyrogenic silica. For example, the thickener can comprise one fumed silica in 0.01 to 2 wt.% based on the total weight of the formulation, and one pyrogenic silica in 0.01 to 2 wt.% based on the total weight of the formulation. Alternatively, the thickener can comprise one fumed silica in 0.1 to 1 wt.% based on the total weight of the formulation, and one pyrogenic silica in 0.1 to 1 wt.% based on the total weight of the formulation.

Exemplary antifoam agents include, but are not limited to, silicone emulsions, long-chain alcohols, fatty acid salts.

Exemplary antimicrobial agents include, but are not limited to: bactericides based on dichlorophen and benzyl alcohol hemiformal; isothiazolinone derivatives, such as alkylisothiazolinones and benzisothiazolinones; and mixtures thereof.

Exemplary antifreeze agents, include, but are not limited to ethylene glycol, propylene glycol, urea, glycerol, and mixtures thereof.

Exemplary colorants include, but are not limited to, the dyes known under the names Rhodamine B, pigment blue 15:4, pigment blue 15:3, pigment blue 15:2, pigment blue 15:1, pigment blue 80, pigment yellow 1, pigment yellow 13, pigment red 1 12, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108, and mixtures thereof.

### METHOD OF USE

The present invention provides a method for controlling weeds comprising contacting the weeds or their locus with an agriculturally effective amount of the formulation of the invention or a tank mixture of the invention.

In an embodiment, the formulation or tank mixture thereof of the present invention may be applied pre-sowing or post-sowing, pre-emergence, or post-emergence of the crop. The mixture may be applied via any method available, for example, furrow spray, foliar application, broadcast, basal application, soil application, soil incorporation or soil injection.

For example, the formulation or tank mixture thereof can be applied in non-crop areas which include but are not limited to, commercial areas, residential areas, lawns, ornamental plants, shrubs, trees, parks, livestock areas, warehouses, food storage facilities, grain bins, turfgrass, pastures, grasslands, rangelands, fallow land, rights-of-way, golf courses, parks, along roadsides, power-lines, pipelines, railways, forests, well sites, and equipment yards.

The mixture of the invention can be added to a broad range of crops, for example sugar cane and Opuntia ficus-indica.

The plants include genetically modified plants which tolerate the action of herbicides, fungicides or insecticides as a result of breeding and/or genetically engineered methods.

The weeds that can be treated with the mixture of the invention are, for example, *Digitaria nudo, Ipomoea grandifolia, Panicum maximum, Amaranthus viridis, Brachiaria decumbens, Cenchrus echinatus, Acanthospermum hispidum, Commelina benghalensis* or *Senna obtusifolia.*

The ratio of application of the formulation of the invention varies depending upon various conditions such as the weather conditions, the type of crop, the desired effect, and the type of weeds. For example, the application rates of the mixture comprising clomazone and diuron are from 1 g/ha to 1000 g/ha, for example from 500 g/ha to 1000 g/ha or from 1 g/ha to 500 g/ha.

The following representative examples illustrate the practice of the present invention in some of its embodiments but should not be construed as limiting the scope of the invention. Other embodiments will be apparent to one skilled in the art from consideration of the specification and examples.

### REPRESENTATIVE EXAMPLES

Block copolymer: Ethylan^{®} NS-500LQ
Acrylic copolymer: Atlox^{®} 4913 (30 wt.% of copolymer + 70 wt.% of propylene glycol)
Sodium dodecyl benzene sulfonate: Rhodocal^{®} 60 BE
Soya oil methyl ester
Isothiazolinones: Proxel^{®}
Ethoxylated sorbitan monolurate: Tween^{®} 24
Polydimethylsiloxane: SILCOLAPSE^{®} 411
Propylene glycol
Condensed aromatic sulfonate sodium salt: Morwet^{®} 425
Pyrogenic silica: Aerosil^{®} R 805
Fumed silica: Carb-O-Sil^{®} M5
Tall oil: Altapyne^{®} M28B

### Example 1: preparation of a formulation

In a tank with agitation melted Clomazone and Hexazinone are loaded at 70°C while keeping agitation (300-400 rpm) until complete solubilization of the Hexazinone. Then, heat is turned off and under stirring Ethylan^{®} NS-500LQ (non-ionic surfactant; Block copolymer), Atlox^{®} 4913 (non-ionic surfactant; acrylic copolymer), Rhodocal^{®} 60 BE (anionic surfactant; sodium dodecyl benzene sulfonate), methylated soybean ester (solvent; soya oil methyl ester), Proxel^{®} (biocide; isothiazolinones), Tween^{®} 24 (non-ionic surfactant; ethoxylated sorbitan monolurate), SILCOLAPSE^{®} 411 (anti-foam; polydimethylsiloxane), (thickener; propylene glycol), Morwet^{®} 425 (anionic surfactant; condensed aromatic sulfonate sodium salt), Altapyne^{®} M28B (solvent; tall oil) are added. The mixture is cooled down below a temperature of 35°C, and Diuron, Aerosil^{®} R 805 (thickener; pyrogenic silica) and Carb-O-Sil^{®} M5 (thickener; fumed silica) are added. The agitation is increased to a speed of 1000 to 1500 rpm using a Cowles type agitator. The total mass is passed through a colloid mill in line, cooled down to room temperature and filtered (100 mesh sieves).

### Example 2: evaluation of the re-crystallization of diuron

Following the general procedure of Example 1, the formulations indicated in Table 1 below were prepared. All the numbers are given in weight percent (wt.%), except the last row ("Total Propylene glycol:Hexazinone"), which is a weight proportion, and in all formulations the total mass was 1,158.2 grams. For each formulation the amount of solid diuron was measured by using CIPAC MT 39.3 protocol after allowing the formulations to stand for 2 weeks at 0°C.

**Table 1**

| **Component** | **Role** | **C1** | **C2** | **C3** | **A** |
|---|---|---|---|---|---|
| CLOMAZONE | Active Ingredient | 24.18 | 24.18 | 24.18 | 24.18 |
| DIURON | Active Ingredient | 21.59 | 21.59 | 21.59 | 21.59 |
| HEXAZINONE | Active Ingredient | 6.04 | 6.04 | 6.04 | 6.04 |
| Block copolymer | Surfactant | 3.45 | 3.45 | 3.45 | 3.45 |
| Acrylic copolymer | Surfactant | 10.36 | 10.36 | 9.50 | 8.63 |
| Sodium dodecyl benzene sulfonate | Surfactant | 8.63 | 8.63 | 8.63 | 8.63 |
| Soya oil methyl ester | Co-Solvent | 8.94 | 10.66 | 11.53 | 12.39 |
| isothiazolinones | Biocide | 0.02 | 0.02 | 0.02 | 0.02 |
| Ethoxylated sorbitan monolurate | Surfactant | 8.63 | 8.63 | 8.63 | 8.63 |
| polydimethylsiloxane | Anti-foam | 0.04 | 0.04 | 0.04 | 0.04 |
| Propylene glycol | Thickener/ solvent | 3.45 | 1.73 | 1.73 | 1.73 |
| Condensed aromatic sulfonate sodium salt | Surfactant | 2.16 | 2.16 | 2.16 | 2.16 |
| Pyrogenic silica | Thickener | 0.43 | 0.43 | 0.43 | 0.43 |
| Fumed silica | Thickener | 0.35 | 0.35 | 0.35 | 0.35 |
| Tall oil | Co-Solvent | 1.73 | 1.73 | 1.73 | 1.73 |
| **Total Propylene glycol** | | 10.71 | 8.98 | 8.38 | 7.77 |
| **Total Propylene glycol:Hexazinone** | | 1.77 | 1.49 | 1.39 | 1.29 |
| **Diuron recrystallization** | | YES | YES | YES | NO |

The total amount of propylene glycol is the sum of the amount of propylene glycol added plus the amount present in the acrylic copolymer; 70 wt.% of the acrylic copolymer is propylene glycol.

The results in Table 1 show how, once clomazone has been saturated with hexazinone, the proportion of propylene glycol to hexazinone is critical to avoid recrystallization of diuron. The formulation A (according to the invention) avoids the crystallization, while higher amounts of propylene glycol with respect to hexazinone (e.g. comparative formulations C1, C2 or C3) result in the formation of solid diuron.

The robustness of the system was tested by using different amounts of clomazone and hexazinone while fixing the amounts of the rest of the components. Formulations having 28 wt.% of clomazone and 6.3 wt.% of hexazinone (Propylene glycol: Hexazinone of 1.22), or 28 wt.% of clomazone and 7.7 wt.% of hexazinone (Propylene glycol:Hexazinone of 1.00), or 26.6 wt.% of clomazone and 6.3 wt.% of hexazinone, or 26.6 wt.% of clomazone and 7.7 wt.% of hexazinone, were tested for crystals after 24 hours at 54 °C and cooling to 23 °C. None of the formulations showed any signs of crystals of diuron being formed.

The robustness was further tested by varying the amounts of each individual active ingredient. In this way formulations similar to formulation A (Propylene glycol:Hexazinone of 1.29), except for the amounts of clomazone (26 wt.%, 27 wt.%, 28 wt.%, or 29 wt.%), were tested for diuron crystals after 24 hours at 54 °C and cooling to 23 °C. None showed signals of diuron crystals. Further formulations similar to formulation A, except for the amounts of hexazinone of 6 wt.%, 7 wt.%, or 8 wt.% (Propylene glycol:Hexazinone of 1.28, 1.10 and 0.96, respectively), were tested for diuron crystals after 24 hours at 54 °C and cooling to 23 °C. None showed signals of diuron crystals. Further formulations similar to formulation A (Propylene glycol: Hexazinone of 1.29), except for the amounts of diuron (22 wt.%, 23 wt.%, 24 wt.%, 25 wt.%, 26 wt.%, or 27 wt.%), were tested for diuron crystals after 24 hours at 54 °C and cooling to 23 °C. None showed signals of diuron crystals.

### Example 3: measuring solubility in clomazone and propyleneglycol

All solubilities mentioned in the present document were measured through visual verification. In a known quantity of clomazone or propylene glycol at a desired temperature, the solute (e.g. hexazinone or diuron) was added at a rate of 0.2g/5min. When the solution did not eliminate the turbidity, the total amount added.

The results at different temperatures to the solubility test of diuron in clomazone are summarized in Table 2:

**Table 2**

| Temperature (ºC) | Solubility of Diuron in Clomazone (g/L) |
|---|---|
| 23 | 28 |
| 40 | 36 |
| 54 | 61 |

The results at different temperatures to the solubility test of hexazinone in clomazone are summarized in Table 3:

**Table 3**

| Temperature (ºC) | Solubility of Hexazinone in Clomazone (g/L) |
|---|---|
| 23 | 53 |
| 40 | 62 |
| 54 | 73 |

The results at different temperatures to the solubility test of hexazinone in propyeneglycol are summarized in Table 4:

**Table 4**

| Temperature (ºC) | Solubility of Hexazinone in Propileneglycol (g/L) |
|---|---|
| 23 | 510 |
| 40 | 580 |
| 54 | 630 |

### Example 5: Election of silica

In order to arrive to the optimum amount of silica in the formulations of example 2, the inventors previously tested pyrogenic silica (e.g. Aerosil^{®} R 805) and fumed silica (Carb-O-Sil^{®} M5) in different proportions. To do so, phase separation was tested in a composition having the same components as formulation A of example 2, except for the silica. The results are shown in Table 5.

**Table 5**

| **silica:** | **silica (g/L)** | **% fase separation after 2 weeks at 40ºC** |
|---|---|---|
| Car-o-sil M5 | 10 | 45 |
| Car-o-sil M5 | 20 | 33 |
| Car-o-sil M5 | 30 | 31 |
| Aerosil R 805 | 10 | 43 |
| Aerosil R 805 | 20 | 31 |
| Aerosil R 805 | 30 | 29 |

The results were acceptable at 30 g/L, but the results were surprisingly better when the two silicas were added to the formulation, as shown by the results of Table 6.

**Table 6**

| **Used silica:** | **silica (g/L)** | **% fase separation after 2 weeks at 40ºC** |
|---|---|---|
| Car-o-sil M5 + Aerosil R 805 (1.25:1) | 10 | 31 |
| Car-o-sil M5 + Aerosil R 805 (1.25:1) | 20 | 18 |
| Car-o-sil M5 + Aerosil R 805 (1.25:1) | 30 | 15 |

Comparing the results of Table 6 and Table 5 it can be seen that for the same total amount of silica, the mixture of Car-o-sil M5 + Aerosil R 805 performed surprisingly better than either of them alone, significantly reducing phase separation. For example, at 30 g/L the percentage of phase separation with Car-o-sil M5 was 31% and 29% with Aerosil R 805. However, with a mixture of both, the phase separation was only 15% (about half).

The optimum proportion between the pyrogenic and the fumed silicas was tested. The results in Table 7 show that an excess of either of them provided the best results.

**Table 7**

| **Used silica:** | **silica (g/L)** | **% fase separation after 2 weeks at 40ºC** |
|---|---|---|
| Car-o-sil M5 + Aerosil R 805 **(1:1)** | 15 | 28 |
| Car-o-sil M5 + Aerosil R 805 **(1.25:1)** | 15 | 18 |
| Car-o-sil M5 + Aerosil R 805 **(1.5:1)** | 15 | 18 |
| Car-o-sil M5 + Aerosil R 805 **(1:1.25)** | 15 | 20 |
| Car-o-sil M5 + Aerosil R 805 **(1: 1.50)** | 15 | 20 |

## Claims

1. A formulation comprising:
i) clomazone;
ii) a second active ingredient having a solubility in clomazone above 35 g/L at 23 °C;
iii) diuron; and
iv) a first solvent in which said second active ingredient is more soluble than diuron;
wherein the amount of clomazone is not enough to solubilize all of the second active ingredient present in the formulation;
wherein the amount of said first solvent is enough to solubilize any second active ingredient not solubilized in clomazone; and
wherein the weight proportion between the first solvent and the second active ingredient if less than 1.39.

2. The formulation according to claim 1, wherein said first solvent is propylene glycol.

3. The formulation according to any of the previous claims, wherein said second active ingredient is a herbicide selected from the group consisting of hexazinone, metamitron and metribuzin.

4. The formulation according to any of the previous claims, wherein the active ingredients consist of clomazone, hexazinone, and diuron.

5. The formulation according to any of the previous claims, wherein the amount of said second active ingredient is 105 wt.% or more with respect to the solubility thereof in clomazone.

6. The formulation according to any of the previous claims, wherein the amount of said first solvent is 500 wt.% or less with respect to the solubility of the second active ingredient in the first solvent.

7. The formulation according to any of the previous claims, wherein the weight proportion propylene glycol:hexazinone is 1.35 or less.

8. The formulation according to any of the previous claims, wherein the weight proportion clomazone:hexazinone is equal to or less than 10.

9. The formulation according to any of the previous claims, wherein the weight proportion diuron:hexazinone is between 1 and 10.

10. The formulation according to any of the previous claims, wherein the amount of clomazone is between 5 and 90 wt.%, with respect to the total weight of the formulation.

11. The formulation according to any of the previous claims, comprising 1 to 10 wt.% of a fatty alcohol ethoxylate, 1 to 20 wt.% of an acrylic copolymer and 0.1 to 10 wt.% of said first solvent.

12. A formulation comprising clomazone; a second active ingredient having a solubility in clomazone above 35 g/L at 23 °C; diuron; and a mixture of a fumed silica and a pyrogenic silica.

13. A tank mixture comprising
- a formulation as defined in any of the previous claims; and
- water or an adjuvant, or a combination of water and an adjuvant.

14. A method for controlling weeds comprising contacting the weeds or their *locus* with an agriculturally effective amount of the formulation as defined in any of claims 1-12 or a tank mixture as defined in claim 13.
